# EUROPÄISCHE PATENTSCHRIFT

(11) **EP 1 321 386 B1**
(45) Veröffentlichungstag und Bekanntmachung des Hinweises auf die Patenterteilung: **23.07.2008**
(21) Anmeldenummer: 02090406.6
(22) Anmeldetag: 12.12.2002
(51) Int. Cl.: B65G 1/12

(54) **Umlauf-Lagersystem**
Carousel storage system
Système de stockage à carrousel

(30) Priorität: 21.12.2001 DE 10164594
(43) Veröffentlichungstag der Anmeldung: 25.06.2003
(73) Patentinhaber: Bellheimer Metallwerk GmbH, 76752 Bellheim (DE)
(72) Erfinder: McFarland, John, Rugby, CV22 5BD (GB)
(74) Vertreter: Grünecker, Kinkeldey, Stockmair & Schwanhäusser Anwaltssozietät

(56) Entgegenhaltungen:
- DE-A1- 1 929 890
- DE-A1- 2 441 095
- FR-A- 2 132 575
- GB-A- 2 078 651
- US-A- 5 921 739
- PATENT ABSTRACTS OF JAPAN Bd. 012, Nr. 325 (M-737), 5. September 1988 (1988-09-05) & JP 63 092510 A (NEC HOME ELECTRONICS LTD), 23. April 1988 (1988-04-23)

## Beschreibung

Die Erfindung betrifft ein Umlauf-Lagersystem nach dem Oberbegriff des Anspruchs 1.

Die Erfindung bezieht sich auf ein Bausatz für ein Umlauf-Lagersystem nach dem Oberbegriff des Anspruchs 14 sowie auf ein Verfahren zum Verwalten eines Umlauf-Lagersystems nach dem Oberbegriff des Anspruchs 15.

Umlauf-Lagersysteme sind aus dem Stand der Technik bekannt.

So ist in der US 2,600,869 ein Umlauf-Lagersystem gezeigt und beschrieben, bei dem das Lagergut in Lagergutträgem eingelagert ist. Die Lagergutträger sind jeweils paarweise zusammengefasst und jeweils an den senkrecht verlaufenden Abschnitten einer einzigen umlaufenden Endloskette eingehängt, so dass zwei Lagersäulen gebildet werden. Am oberen und unteren Ende der Lagersäulen werden die Lagergutträger während des Umlaufs von der einen Lagersäule zur anderen überführt.

In der US 5,108,163 ist ebenfalls ein Umlauf-Lagersystem nach dem Paternoster-Prinzip gezeigt und beschrieben, bei dem die Lagergutträger bei diesem Umlauf-Lagersystem in die senkrecht verlaufenden Abschnitte zweier, zu beiden Seiten der Lagergutträger angebrachter Endlosketten eingehängt sind, so dass auch bei dieser Vorrichtung zwei Lagersäulen gebildet werden. Am oberen und unteren Ende einer jeden Lagersäule werden die Lagergutträger von der einen Lagersäule zur anderen Lagersäule der Förderketten umgesetzt.

Bei dem Umlauf-Lagersystem der WO 00/138203, das von den Umlauf-Lagersystemen der US 2,600,869 und der US 5,108,163 als Stand der Technik ausgeht, wurden Verbesserungen lediglich hinsichtlich der Ausgestaltung derjenigen Vorrichtungen gemacht, durch die die Lagergutträger von der einen Lagersäule zur anderen umgesetzt werden.

In der US 4,608,386 ist ein Umlauf-Regal mit zwei Lagersäulen beschrieben, die mittels senkrechter Schneckentriebe angehoben oder abgesenkt werden. Zwischen den beiden Lagersäulen werden die einzulagernden Gegenstände durch horizontal bewegliche Trägerwagen oberhalb und unterhalb der Lagersäulen gefördert. Die senkrecht fördernden Schnecken und die horizontal arbeitenden Trägerwagen sind über ein Maltesergetriebe miteinander zwangsgekoppelt.

Bei der Speichereinrichtung der DE-AS 1 173 027 werden Gestelle zur Aufnahme von einzulagernden Gegenständen durch eine gemeinsame Antriebsvorrichtung entgegengesetzt zueinander in senkrechter Richtung bewegt. Die Bewegung der Lagersäulen ist über einen Zahnradantrieb miteinander zwangsgekoppelt.

In der US 2,762,489 ist eine Vorrichtung zum Transportieren und Speichern von Waren beschrieben. Die Behälter lagern in zwei senkrechten Lagersäulen, die jeweils mit einem Hubzylinder bewegbar sind. Zwei horizontal fördernde Einrichtungen in Form jeweils eines elektrisch angetriebenen Wagens transportieren die Behälter zwischen den beiden Lagersäulen. Die Bewegungen der horizontalen Wagen und der Lagersäulen werden durch Hebel, die von den Wagen bei ihrer Bewegung betätigt werden, synchronisiert.

In der JP 3609210 A ist ein Paternoster-ähnliches Umlaufregal gezeigt, bei dem zwei Lagersäulen jeweils durch einen in senkrechter Richtung umlaufenden Riementrieb angetrieben und oben und unten durch jeweils einen horizontalen Riementrieb verbunden sind.

Aus der DE 2441095 A1 ist ebenfalls ein Paternoster-ähnliches Umlaufregal mit zwei Lagersäulen bekannt. Die beiden Lagersäulen werden durch Arbeitzylinder angehoben und abgesägt. An ihrem oberen und unteren Ende sind die Lagersäulen durch Laufschienen miteinander verbunden, dem ebenfalls jeweils ein Arbeitszylinder zugeordnet ist. Durch synchronische Steuerung der Arbeitszylinder lässt sich ein Umlauf von Lagerträgem durch die beiden Lagersäulen erreichen. Das Umlaufregal der US 5,921,739 weist zwei Lagersäulen auf, die durch Pneumatikzylinder angehoben oder abgesenkt werden. Die Horizontalfördereinrichtung jeweils am oberen und unteren Ende der Lagersäulen wird ebenfalls durch Arbeitszylinder angetrieben.

Die Vorrichtung der GB 2078651 A ist mit zwei vertikal beweglichen Lagersäulen versehen die durch jeweils eine Horizontalfördereinrichtung oben und unten miteinander verbunden sind und so einen Umlauf bilden.

Bei diesen Umlauf-Lagersystemen aus dem Stand der Technik ist eine Erweiterung der Lagerkapazität lediglich über eine Verlängerung der Endlosketten und damit der Lagersäulen möglich. Dies setzt jedoch bestimmte räumliche Gegebenheiten, beispielsweise eine ausreichende Raumhöhe, am Aufstellungsort voraus.

In der DE-PS 370 578 ist eine Trockenanlage mit hintereinander liegenden Kammern beschrieben, wobei das Trockengut durch die Kammern auf- und absteigend hindurchgeführt wird. Die Kammern sind untereinander durch über und unter den Kammern laufende Fördermittel verbunden. Das Trockengut wird in einer jeden Kammer durch Förderketten transportiert, wobei die Förderketten sämtlicher Trockenkammern mit einem gemeinsamen Antrieb fest gekoppelt sind.

Die FR 2132575 zeigt Pufferregal, dass in einer Richtung aufgefüllt wird. Zwischen den Lagersäulen wird das Lagergut durch eine unten gelegene, in ein Richtung arbeitende Horizontalförderrichtung weiter transportiert, so dass sich die Lagersäulen jeweils von unten auffüllen. Durch eine weitere, obere Horizontalfördereinrichtung wird das Lagergut zurücktransportiert.

In der DE 1 929 890 A1 ist in den Figuren 3 und 4 ebenfalls ein System mit einer Vielzahl von nebeneinander angeordneten Lagersäulen gezeigt. Als Vertikalfördereinrichtungen kommen Hubbühlen zum Einsatz. Der Transport des Lagerguts zwischen den Lagersäulen findet jeweils durch eine obere und eine untere Horizontalfördereinrichtung statt. Die DE 1 929 890 A1 offenbart die Merkmale der Oberbegriffe der Ansprüche 1, 14, 15. In der CH 678 940 A5 ist ein Lagersystem beschrieben, das einen Hochregal-Einlagerungsbereich mit einer Vielzahl nach dem Paternosterprinzip arbeitender Einlagerungs-Steigförderer gleicher Höhe umfasst. Durch über und unter den Patemostem angebrachten Horizontalförderer werden die hintereinander liegenden Einlagerungssteigförderer beschickt

Bei den Vorrichtungen der DE-PS 370 578 und der CH 678 940

A5 ist nachteilig, dass das Lagergut umständlich in die einzelnen Paternoster eingelagert werden muss.

Bei sämtlichen oben beschriebenen Umlauf-Lagersystemen ist nachteilig, dass bei hohen Lagerkapazitäten der Zugriff auf die Lagergutträger beispielsweise zur Entnahme oder zum Einlagern von Lagergut unverhältnismäßig lange dauert. Damit sind diese bekannten Umlauf-Lagersysteme nicht bei modernen vollautomatischen Fertigungsstraßen einsetzbar, wo mit hohen Taktraten gearbeitet wird und ein schneller Zugriff auf das im Lagersystem eingelagerte Lagergut erfolgen muss.

In Anbetracht dieser Nachteile liegt der vorliegenden Erfindung die Aufgabe zugrunde, ein Umlauf-Lagersystem zu scharfen, bei dem die Lagerkapazität leicht erweiterbar ist, ohne dass bei großen Lagerkapazitäten die Zugriffsgeschwindigkeit auf das Lagergut übermäßig verringert wird.

Diese Aufgabe wird erfindungsgemäß für ein Umlauf-Lagersystem der eingangs genannten Art dadurch gelöst, dass eine Mehrzahl von am oberen und unteren Ende der Lagersäulen angeordneten, separat ansteuerbaren Horizontatfördereinrichtungen, durch die im Betrieb die Lagergutträger jeweils von einer Lagersäule zu einer anderen Lagersäule überführbar sind.

Diese Lösung ist einfach und hat den Vorteil, dass das Lagersystem durch die Zuordnung weiterer Vertikalfördereinrichtungen zu den jeweiligen Lagersäulen durch Hinzufügen weiterer Lagersäulen mit den zugeordneten Vertikalfördereinrichtungen jederzeit erweiterbar ist. Die erfindungsgemäße Lösung ermöglicht also eine modulare Bauweise.

Bei der erfindungsgemäßen Lösung ist auch bei großen Lagerkapazitäten ein schneller Zugriff auf die Lagergutträger möglich, da jede Lagersäule durch die ihr zugeordnete Vertikalfördereinrichtung unabhängig senkrecht beweglich angetrieben ist. Durch diese Unabhängigkeit der senkrechten Förderung der Lagergutträger kann die bei den bekannten Umlauf-Lagersystemen fest vorgegebene starre Geometrie der Umlaufbahnen der Lagergutträger zugunsten einer flexiblen Anpassung der Umlaufbahnen aufgegeben werden. Beispielsweise können bei mehr als zwei Lagersäulen im Umlauf-Lagersystem von einem Lagergutträger beliebige Umlaufwege eingeschlagen werden, so dass er auf kürzestem Wege zu einem Ort transportiert werden kann, an dem auf ihn zugegriffen werden kann. Ein solcher Ort kann beispielsweise eine Zugriffs- oder Bestückungs- und Entnahmeöffnung oder eine Plattform sein. Zur Optimierung des Umlaufs wirken die Vertikalfördereinrichtungen und die Horizontalfördereinrichtungen zusammen, so dass die Lagergutträger auf schnellstem Wege zur Zugriffsöffnung transportiert werden.

Der konstruktive Aufwand für die Horizontalfördereinrichtungen kann verringert werden, wenn gemäß einer vorteilhaften Ausgestaltung der Erfindung die Lagergutträger einer Lagersäule sich auf einem unteren Lagergutträger abstützen, der sich mit der Vertikalfördereinrichtung im Eingriff befindet. Bei dieser Ausgestaltung wird die gesamte Lagersäule nur durch ihren jeweils unteren Lagergutträger bewegt, während die übrigen Lagergutträger lediglich auf dem unteren Lagergutträger aufliegen. Dies hat den Vorteil, dass die Lagerkapazität ohne Umbaumaßnahmen an den Vertikalfördereinrichtungen lediglich durch Änderung der Stapelhöhe der Lagersäulen verändert werden kann.

Die unabhängige Förderung der Lagergutträger einerseits durch die Vertikalfördereinrichtungen und andererseits durch die Horizontalfördereinrichtungen erfordert eine Synchronisation der Fördereinrichtungen, um die Lagergutträger während des Umlaufs von einer Fördereinrichtung an die nächste sicher zu übergeben. Die Synchronisation kann auf mechanischem Wege durch miteinander gekoppelte Fördereinrichtungen oder auf elektronischem Wege durch eine Steuereinheit erfolgen.

Auch bei schwerer Beladung müssen die einzelnen Lagergutträger sicher in die Vertikalfördereinrichtung einkuppeln und von der Vertikalfördereinrichtung gehalten werden. Hierzu kann die Vertikalfördereinrichtung ein Zugmittelgetriebe, beispielsweise ein Keilriemengetriebe, ein Riemengetriebe oder einen Kettentrieb, aufweisen, mit dem die Lagergutträger während des Umlaufs lösbar in Eingriff bringbar sind. Die Fördereinrichtungen können jeweils zu beiden Seiten der Lagergutträger angeordnet sein.

Um auch schwere Lasten zu fördern, kann erfindungsgemäß in einer weiteren Ausgestaltung vorgesehen sein, dass die Vertikalfördereinrichtung zwei gegenläufige Zugmittelgetriebe an zumindest einer Seite der Lagersäulen umfasst. Bei dieser Ausgestaltung wird das Gewicht der Lagersäule auf zwei Zugmittel verteilt, so dass auch schwere Lasten eingelagert werden können. Wenn als Zugmittel Ketten oder Zahnriemen verwendet werden, so kann gemäß einer Weiterbildung der Erfindung zum Einkuppeln in das Zugmittelgetriebe beispielsweise eine am Lagergutträger angebrachte Zahnstange verwendet werden. Je nach der Anzahl der Zugmitteltriebe kann die Zahnstange einseitig oder mehrseitig verzahnt sein.

Die Vertikalfördereinrichtung kann in einer vorteilhaften Ausgestaltung im unteren Bereich der Lagersäule angeordnet sein. Diese Anordnung ist wartungsfreundlich, da die Vertikalfördereinrichtung im unteren Bereich des Lagersystems für Wartungspersonal leichter zugänglich ist. Weiterhin ist die Anordnung der Vertikalfördereinrichtung im unteren Bereich des Lagersystems in Kombination mit der Ausgestaltung von Vorteil, bei der jeweils der unterste Lagergutträger mit der gesamten darauf aufliegenden Lagersäule durch die Vertikalfördereinrichtung angehoben bzw. abgesenkt wird.

Um bei mehr als zwei Lagersäulen den Umlauf des Lagergutträgers, auf den gerade zugegriffen werden muss, hinsichtlich der Zugriffsgeschwindigkeit zu optimieren, ist es von Vorteil, wenn auch die Horizontalfördereinrichtungen unabhängig voneinander betrieben werden können. Beispielsweise können jeweils am oberen und am unteren Ende einer Lagersäule jeweils separat ansteuerbare Horizontalfördereinrichtungen vorgesehen sein. Bei dieser Ausgestaltung ist es möglich, einen Lagergutträger entlang mehrerer hintereinander geschalteter Horizontalfördereinrichtungen an einzelnen Lagersäulen vorbei zu transportieren. Die Horizontalfördereinrichtung kann ebenfalls ein Zugmittelgetriebe aufweisen.

Um die Erweiterbarkeit des erfindungsgemäßen Umlauf-Lagersystems zu erhöhen, können die Horizontalfördereinrichtung als im wesentlichen einbaufertige Module ausgestaltet sein. In einer Weiterbildung kann dabei ein einziger Antrieb allen Modulen zugeordnet sein. Bei dieser Ausgestaltung kann dann die Antriebsleistung von Modul zu Modul über einheitliche Kupplungselemente übertragen werden.

Eine konstruktiv einfache Lösung zum Transport der Lagergutträger von einer Lagersäue zur nächsten besteht gemäß einer weiteren vorteilhaften Ausgestaltung darin, dass die Horizontalfördereinrichtung eine sich im Wesentlichen in waagerechter Richtung erstreckende Gleitschiene aufweist, auf der sich ein Gleitabschnitt der Lagergutträger beim Transport von einer Lagersäule zur anderen gleitend abstützt. Die Gleitschiene kann mit den Lagergutträgern derart zusammenwirken, dass eine Entnahme des Lagergutträgers aus der Horizontalfördereinrichtung nur an bestimmten Positionen möglich ist. Dies kann beispielsweise durch eine entsprechende Anordnung von Vorsprüngen und Ausnahmen an der Gleitschiene und an den Lagergutträgern realisiert werden.

Um die Lagergutträger von oben von der Horizontalfördereinrichtung auf das obere Ende einer Lagersäule abzustellen oder von unten an die Lagersäule heranzuführen, so dass sie das Gewicht der Lagersäule übernehmen, kann gemäß einer weiteren vorteilhaften Ausgestaltung für jede Lagersäule wenigstens eine Überführungseinrichtung vorgesehen sein. Die Überführungseinrichtung kann zwischen der dieser Lagersäule zugeordneten Horizontalfördereinrichtung und der Vertikalfördereinrichtung dieser Lagersäule angeordnet sein.

Um die Lagergutträger von der Horizontalfördereinrichtung zur Vertikalfördereinrichtung zu überführen, beschleunigt die Überführungseinrichtung den Lagergutträger zunächst in senkrechter Richtung weg von der Horizontalfördereinrichtung, so dass sich der Lagergutträger der Lagersäule annähert. Dann wird die Vertikalgeschwindigkeit des Lagergutträgers verringert und die Lagergutträger werden an der Lagersäule angedockt.

In umgekehrter Förderrichtung von der Vertikalfördereinrichtung zur Horizontalfördereinrichtung wird die Vertikalgeschwindigkeit des Förderabschnittes ausgehend von der Vertikalgeschwindigkeit der Vertikalfördereinrichtung durch die Überführungseinrichtung zunächst erhöht, so dass sich der Lagergutträger von der Lagersäule löst, und anschließend, wenn die Horizontalfördereinrichtung erreicht ist, auf Null verringert, so dass der Lagergutträger in die Horizontalfördereinrichtung einkuppeln kann.

Diese Bewegungsabfolge kann entweder durch eine elektronische Antriebsteuerung oder - auf mechanischem Wege - durch einen Nockentrieb erreicht werden. Der Nockentrieb kann in einer Ausgestaltung ein Zugmittelgetriebe aufweisen.

Die Erfindung betrifft auch einen Bausatz für ein Umlauf-Lagersystem nach einer der obigen Ausgestaltungen, wobei der Bausatz eine Mehrzahl von Lagersäulenmodulen und Horizontalfördereinrichtungen aufweist. Die Lagersäulenmodule sind im Wesentlichen identisch aufgebaut und können aneinander angestückelt werden, so dass die Lagerkapazität durch einfaches Hinzufügen weiterer Lagersäulen erhöht werden kann. Jedes Lagersäulenmodul weist dabei eine eigene unabhängige Vertikalfördereinrichtung auf. Durch die Horizontalfördereinrichtungen werden die einzelnen Lagersäulen miteinander verbunden und der Umlauf der Lagegutträger ermöglicht. Insbesondere können die Fördereinrichtung allesamt als Einbaumodule ausgebildet sein, die als Einrichtungen in das Umlauf-Lagersystem montiert werden können.

Des Weiteren betrifft die Erfindung ein Verfahren zum Verwalten eines Umlauf-Lagersystems mit einer Mehrzahl von in Lagersäulen angeordneten Lagergutträgem, bei dem einer der Lagergutträger aus einer Lagersäule in eine vorbestimmte Zugriffsposition gebracht wird, indem die Lagergutträger umlaufen und dabei von einer Lagersäule in eine andere Lagersäule überführt werden.

Die erfindungsgemäße Erweiterbarkeit der Lagerkapazität und die Erhöhung der Zugriffsgeschwindigkeit auf einzelne Lagergutträger wird dadurch erreicht, dass erfindungsgemäß bei dem Verfahren die Lagersäulen unabhängig voneinander in vertikaler Richtung verfahren werden und mittels einer Mehrzahl von oberen und einer Mehrzahl von unteren Horizontalfördereinrichtungen zwischen den Lagersäulen transportiert werden.

Im Folgenden wird die Erfindung anhand eines Ausführungsbeispiels mit in Bezug auf die Zeichnungen genauer erläutert. Es zeigen:
- Fig. 1: eine perspektivische Darstellung eines erfindungsgemäßen Umlauf-Lagersystems, wobei die Seitenwände des Umlauf-Lagersystems durchsichtig dargestellt sind;
- Fig. 2: eine schematische Vorderansicht des Umlauf-Lagersystems der Fig. 1;
- Fig. 3: eine schematische Seitenansicht des Umlauf-Lagersystems der Fig. 1 zur Erläuterung der Umlaufwege von Lagergutträgem;
- Fig. 4: eine perspektivische Ansicht eines Details des Umlauf-Lagersystems der Fig. 1, wobei Lagergutträger, Vertikalfördereinrichtung und eine Überführungseinrichtung sowie ein Teil einer Horizontalfördereinrichtung dargestellt sind;
- Fig. 5: ein Detail der Fig. 4 in einer perspektivischen Ansicht, wobei eine Überführungseinrichtung dargestellt ist;
- Fig. 6: eine schematische Skizze der Überführungseinrichtung der Fig. 5 zur Erläuterung der Funktionsweise;
- Fig. 7A: eine perspektivische Detailansicht der Fig. 4, wobei eine Vertikalfördereinrichtung dargestellt ist;
- Fig. 7B: eine perspektivische Darstellung einer Alternative zu der in Fig. 7A dargestellten Ausgestaltung;
- Fig. 8: eine perspektivische Detailansicht eines Seitenabschnittes eines Lagergutträgers;
- Fig. 9A: eine schematische Darstellung zur Erläuterung der Funktionsweise der Horizontalfördereinrichtung;
- Fig. 9B: ein Detail der Fig. 9A.

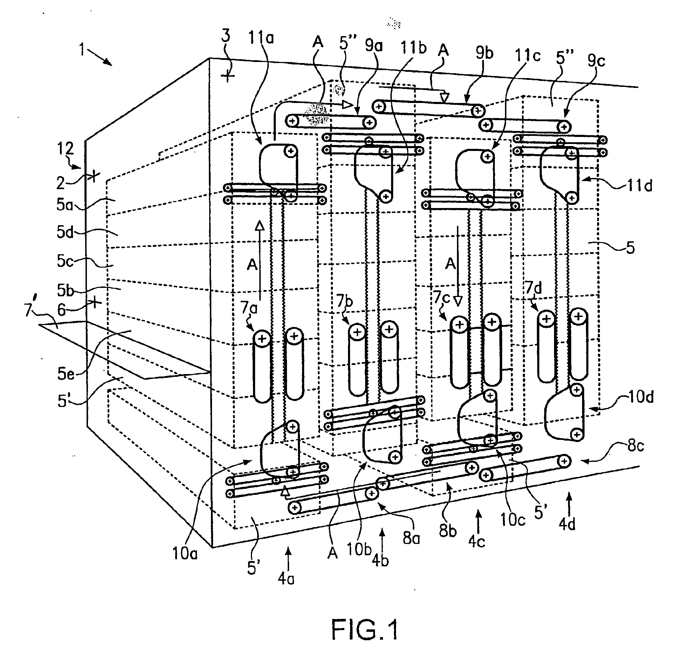

Zunächst wird mit Bezug auf die Fig. 1 der Aufbau eines erfindungsgemäßen Umlauf-Lagersystems beschrieben. Im Folgenden sind bei mehreren baugleichen Elementen die einzelnen Elemente zusätzlich zur Bezugsziffer mit Buchstaben gekennzeichnet, um die einzelnen Elemente voneinander zu unterscheiden. Kommt es bei der folgenden Beschreibung nicht auf das einzelne Element als solches an, sind diese Buchstaben weggelassen.

In Fig. 1 ist eine perspektivische Ansicht eines Umlauf-Lagersystems 1 gezeigt, wobei die Vorderseite 2 des Lagersystems und eine Seitenwand 3 durchsichtig dargestellt sind.

Ein Umlauf-Lagersystem der in Fig. 1 dargestellten Art weist eine Mehrzahl von Lagersäulen 4a, 4b, 4c, 4d ... aus übereinander angeordneten Lagergutträgern 5a bis 5e auf.

Das Umlauf-Lagersystem der Fig. 1 weist ferner eine Zugriffsöffnung 6 auf, über die Lagergut aus den Lagergutträgern 5 entnommen oder Lagergut in die Lagergutträger 5 eingelagert werden kann.

Vor der Zugriffsöffnung 6 kann eine Plattform 7' angeordnet sein, auf der Lagergut der einfachen Handhabung wegen abgelegt werden kann.

Die Lagersäulen 4 erstrecken sich parallel zur Zugriffsöffnung 6 und sind hintereinander in Richtung weg von der Zugriffsöffnung 6 parallel zueinander gestaffelt. Beim Ausführungsbeispiel der Fig. 1 sind beispielhaft vier Lagersäulen 4a, 4b, 4c, 4d dargestellt, es kann jedoch eine beliebige Anzahl von Lagersäulen, jedoch mindestens zwei, vorgesehen sein.

Jede Lagersäule 4a ... d weist an ihren sich gegenüberliegenden Seiten jeweils eine Vertikalfördereinrichtung 7a ... d auf. Durch die Vertikalfördereinrichtungen 7 werden die Lagergutträger 5 in der jeweiligen Lagersäule 4 in senkrechter Richtung nach oben oder unten bewegt.

Um die Lagergutträger in waagerechter Richtung von einer Lagersäule zur anderen zu fördern, sind untere Horizontalfördereinrichtungen 8a ... c am unteren Ende der Lagersäulen vorgesehen. Ähnlich sind am oberen Ende der Lagersäulen 4 obere Horizontalfördereinrichtungen 9a ... c vorgesehen. Die Horizontalfördereinrichtungen 8, 9 überbrücken die Lagersäulen in waagerechter Richtung und erstrecken sich, ausgehend von der ersten, an der Zugriffsöffnung liegenden Lagersäule 4a, von jeweils einer Lagersäule zur dahinter liegenden benachbarten Lagersäule. In Fig. 1 ist dargestellt, wie gerade die Lagergutträger 5' am unteren Enden und die Lagergutträger 5" am oberen Ende der Lagersäulen 4 durch die Horizontalfördereinrichtungen zwischen den Lagersäulen 4 transportiert werden.

Des Weiteren sind zwischen den Vertikalfördereinrichtungen 7a...d einer jeden Lagersäule 4 und den dieser Lagersäule zugeordneten Horizontalfördereinrichtungen 8, 9 jeweils untere 10a ... d und obere 11a ... d Überführungseinrichtungen vorgesehen.
Die unteren Überführungseinrichtungen 10a ... d dienen dazu, die Lagergutträger 5' von den unteren Horizontalfördereinrichtungen 8a ... c aufzunehmen, in vertikaler Richtung zu beschleunigen und von unten an den untersten Lagergutträger 5a heranzuführen und an die Lagersäule 4 anzukoppeln, wenn sich die Lagersäule 4 nach oben bewegt.

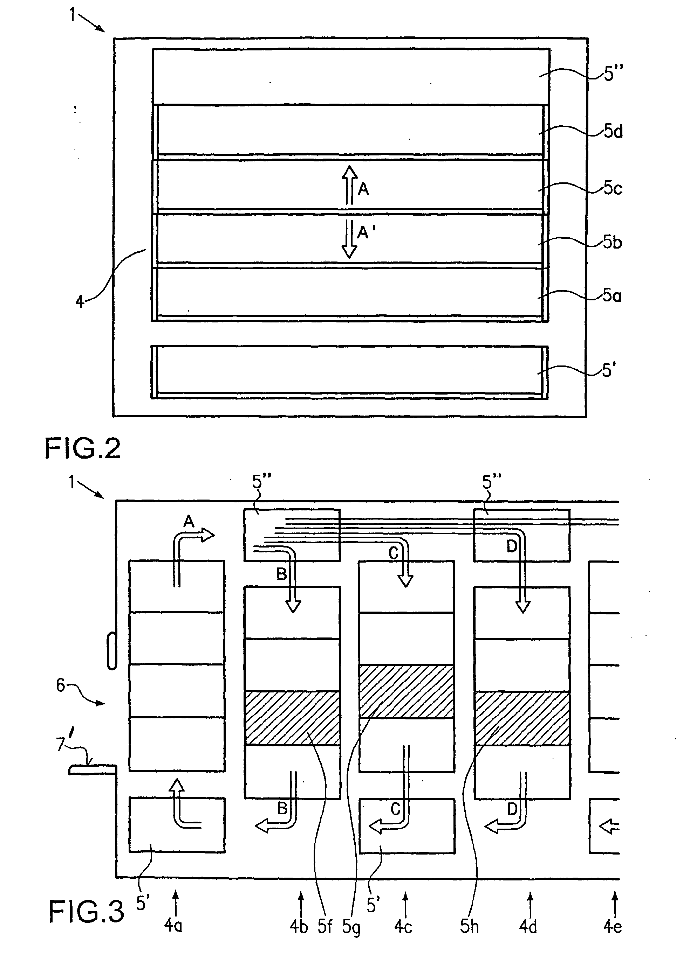

Bewegt sich die Lagersäule 4 dagegen nach unten, so entnimmt die untere Überführungseinrichtung 10 den untersten Lagergutträger, beschleunigt ihn in vertikaler Richtung nach unten, so dass er sich von der jeweiligen Lagersäule 4 löst und bremst dann den Lagergutträger ab, so dass er von der dieser Lagersäule 4 zugeordneten unteren Horizontalfördereinrichtung 8 aufgenommen und in horizontaler Richtung wegtransportiert werden kann. Dies ist schematisch in der Fig. 2 dargestellt, in der die Bewegungsrichtung der Lagersäule durch den Doppelpfeil A angegeben ist.

Die oberen Überführungseinrichtungen 11 funktionieren auf ähnliche Weise: Bewegt sich die Lagersäule nach oben, so ergreifen die oberen Überführungseinrichtungen jeweils den obersten Lagergutträger 5e und beschleunigen ihn in Richtung nach oben, so dass er sich von der jeweiligen Lagersäule 4 löst. Dann wird der Lagergutträger 5e auf eine Vertikalgeschwindigkeit Null oder nahe Null abgebremst, so dass er von der dieser Lagersäule 4 zugeordneten oberen Horizontaleinrichtung 9 ergriffen und in horizontaler Richtung von dieser Lagersäule wegtransportiert werden kann.

Bewegt sich die Lagersäule 4 nach unten, ergreift die obere Überführungseinrichtung einen von der Horizontalfördereinrichtung 9 zugeführten Lagergutträger 5", beschleunigt ihn in vertikaler Richtung nach unten und legt ihn oben auf der Lagersäule 4 ab.

Durch das synchronisierte Zusammenspiel der Fördereinrichtungen 7, 8, 9, 10 und 11 wird ein Umlauf der Lagergutträger 5 im Umlauf-Lagersystem 1 erreicht, wobei beliebige Lagersäulen 4 an diesem Umlauf beteiligt werden können. Durch den Pfeil A ist in Fig. 1 ein solcher Umlauf beispielhaft dargestellt.

In Fig. 3 sind schematisch verschiedene Umlaufbahnen der Lagergutträger durch die Pfeile A, B, C, D und E dargestellt. Hierbei ist zu beachten, dass die Richtung des Umlaufs auch ohne weiteres umgekehrt werden kann.

Die der Zugriffsöffnung 6 zugewandte Lagersäule kann dabei stillgesetzt werden und es können lediglich zwei der hinteren Lagersäulen betrieben werden, so dass der als nächnächstes zu entnehmende Lagergutträger in die Nähe der Zugriffsöffnung 6 gebracht werden kann.
So lässt sich beispielsweise ein Umlauf der Lagergutträger durch die Lagersäulen 4a, 4b wie bei einem Paternoster-System gemäß den Pfeilen A, B erreichen. Während des Umlaufs durch die Lagersäulen 4a und 4b können die restlichen Lagersäulen 4c, 4d, 4e ruhen oder aber zeitgleich einen parallelen Umlauf durchführen, um bereits Lagergutträger für den nächsten Zugriff auf das Lagergut in Position zu bringen.

Durch den Umlauf gemäß der Pfeile A, B kann ein in der Lagersäule 4b angeordneter Lagergutträger 5f in den Bereich der Zugriffsöffnung 6 gefördert werden.

Soll dagegen ein Lagergutträger 5g in der Lagersäule 4c zur Zugriffsöffnung 6 transportiert werden, so findet ein Umlauf entlang der Pfeile A, C bei stillstehender Lagersäule 4b statt. Auf diese Weise kann der Lagergutträger 5g schnell zur Zugriffsöffnung 6 gefördert werden.

Auf ähnliche Weise kann entlang der Pfeilkombination A, D bei stillstehenden Lagersäulen 4b und 4c der Lagergutträger 5h in der Lagersäule 4d schnell an die Zugriffsöffnung 6 transportiert werden.

Durch die Zuordnung der Vertikal-Fördereinrichtungen 7 und der Überführungseinrichtungen 10, 11 zu jeweils einer Lagersäule bildet jede Lagersäule 4 mitsamt den Vertikalfördereinrichtungen 7 und den beiden Überführungseinrichtungen 10, 11 ein Lagersäulenmodul, so dass sich das Umlauf-Lagersystem baukastenartig durch Aneinanderreihen beliebig vieler Lagersäulenmodule auf die notwendigen Kapazitäten erweitern lässt. De Lagersäulenmodule werden durch die horizontalen Fördereinrichtungen 8, 9 überbrückt und ermöglichen den Umlauf der Lagergutträger 5 durch das Umlauf-Lagersystem.

Beim Ausführungsbeispiel der Fig. 1 sind die Lagergutträger 5 in einer Lagersäule 4 aufeinandergestapelt und stützen sich mit ihrem Gewicht auf dem jeweils unteren Lagergutträger 5a ab. Durch dieses Prinzip kann die Höhe der Lagersäule 4 einfach durch eine Verlängerung der Stapelhöhe ohne Umbaumaßnahmen an den Fördereinrichtungen 7, 8, 9, 10, 11 verändert werden. Der Abstand zwischen der im unteren Bereich des Umlauf-Lagersystems 1 angeordneten Vertikalfördereinrichtung 7 und der jeweiligen oberen Überführungseinrichtung 11 ist beliebig und kann an die jeweiligen Erfordernisse angepasst werden.

Im Hinblick auf die Fig. 1 ist schließlich noch anzumerken, dass die Fördereinrichtungen 7, 8, 9, 10, 11 an beiden Seiten 3, 12 des Umlauf-Lagersystems identisch angeordnet sind.

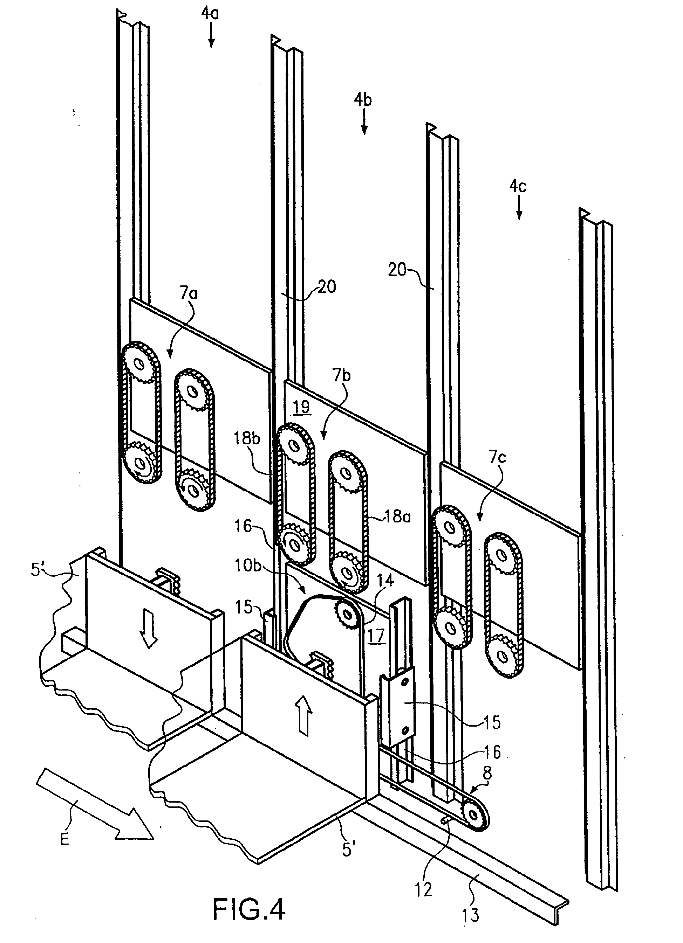

Fig. 4 zeigt ein Detail eines unteren Abschnittes des Umlauf-Lagersystems 1 der Fig. 1 in einer perspektivischen Ansicht. Der Übersichtlichkeit halber sind bei den Lagersäulen 4a und 4c der Fig. 4 die unteren Überführungseinrichtungen 10 weggelassen. Außerdem sind die Lagergutträger 5 in den einzelnen Lagersäulen nicht dargestellt.
Aus der Darstellung der Fig. 4 wird die Anordnung und das Zusammenwirken der Fördereinrichtungen 7, 8, 10 im unteren Bereich des Umlauf-Lagersystems 1 deutlich.

Die beiden Lagergutträger 5' werden durch die als Zugmittelgetriebe ausgebildete untere Horizontalfördereinrichtung 8 in Richtung des Pfeiles E transportiert. Beim Ausführungsbeispiel der Fig. 4 ist die untere Horizontalfördereinrichtung 8 mit einem Kettentrieb versehen; sie kann alternativ auch einen Riementrieb mit einem Keilriemen oder Zahnriemen aufweisen.

Die Horizontalfördereinrichtung 8 weist einen Mitnehmer 12 auf, durch den die Lagergutträger 5' entlang einer Gleitschiene 13 von einer Lagersäule zur nächsten gefördert werden.

Die untere Überführungseinrichtung 10b weist ein Zugmittelgetriebe 14 sowie zwei vertikal bewegliche Schlitten 15 auf, die vom Zugmittelgetriebe 14 (in Fig. 4 nicht gezeigt) angetrieben werden und durch Führungsschienen 16 zu beiden Seiten der Überführungseinrichtung in senkrechter Richtung geführt sind. Die Führungsschienen 16 dienen gleichzeitig als Träger für die gesamte Überführungseinrichtung 10. Zwischen den Führungsschienen ist eine Montageplatte 17 angebracht, auf der das Zugmittelgetriebe 14 und deren Antrieb (nicht gezeigt) angebracht sind. Die Überführungseinrichtung 10 bildet somit eine separat montierbare Einrichtung mit den Führungsschienen 16 und der Platte 17 als Rahmen.

Die Vertikalfördereinrichtungen 7 bestehen aus zwei gegenläufig angetriebenen Zugmitteltrieben 18a und 18b, die nebeneinander auf einer Montageplatte 19 angeordnet sind. Die Montageplatte 19 erstreckt sich zwischen zwei Vertikalpfeilern 20, die das Gerüst des Umlauf-Lagersystems 1 bilden. Durch die Länge der Pfeiler 20 wird die maximale Höhe der Lagersäule festgelegt.

Anhand der Fig. 4 ist leicht zu erkennen, dass das Umlauf-Lagersystem durch Hinzufügen weiterer Pfeiler 20, von oberen und unteren Überführungseinrichtungen 10, 11, einer Vertikalfördereinrichtung 7 und von oberen und unteren Horizontalfördereinrichtungen 8, 9 um eine Lagersäule erweiterbar ist

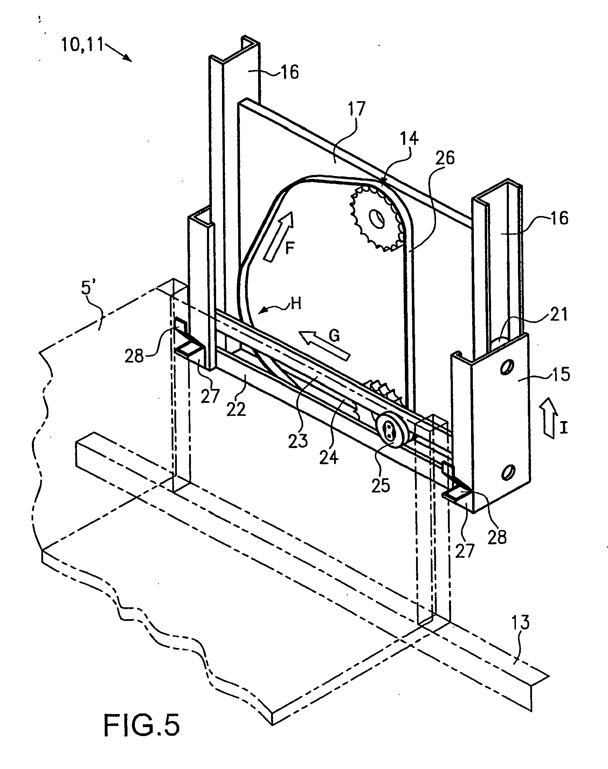

Nun wird anhand der Fig. 5 der Aufbau einer Überführungseinrichtung 10, 11 erläutert. Fig. 5 stellt ein Detail der Fig. 4 in perspektivischer Ansicht dar.

Der Einfachheit halber sind in der Fig. 5 lediglich eine Überführungseinrichtung 10, 11 sowie Teile eines Lagergutträgers 5' sowie eine Gleitschiene 13 dargestellt. Die untere Horizontalfördereinrichtung 8 ist weggelassen. Für die bereits aus der Fig. 4 bekannten Bauelemente werden in der Fig. 5 dieselben Bezugszeichen verwendet.

In Fig. 5 ist zu erkennen, dass die Schlitten 15 durch Rollen 21 entlang der im Wesentlichen U-förmigen Führungsschienen 16 geführt werden. Die Schlitten 15 an einer Seite der Lagergutträger sind durch zwei im wesentlichen waagerecht verlaufende, voneinander beabstandete Streben 22, 23 miteinander verbunden. Zwischen den beiden Streben 22, 23 ist ein im Wesentlichen schlitzförmiger Zwischenraum 24 ausgebildet, in dem ein Rollkörper 25 entlang der Streben beweglich geführt ist. Der Rollkörper 25 ist scheibenoder rollenförmig ausgestaltet und zur Stabilisierung mit einer umlaufenden Rille versehen, in die die Streben 22, 23 eingreifen. Der Rollkörper 25 ist mit dem Zugmittel 26 des Zugmittelgetriebes 14 der Überführungseinrichtung 10, 11 verbunden und läuft mit dem Zugmittel 26 in Pfeilrichtung F um, wobei er die Schlitten 15 in senkrechter Richtung hin und her bewegt.

Der Zugmitteltrieb 14, die Rollkörper 25 zu beiden Seiten und die Schlitten 15 bilden eine Art Nockentrieb, dessen Aufbau und Funktion im Folgenden genauer erläutert wird.

Ausgehend von der in Fig. 5 dargestellten Stellung bewegt sich der Rollkörper 25 zunächst in Pfeilrichtung E nach rechts. Sobald der Rollkörper 25 in den Bereich H des Zugmittelgetriebes 14 kommt, bewegt er über die Streben 22, 23 den Schlitten 15 nach oben. Der Schlitten 15 ist mit Haltekörpern 27 mit nach oben weisenden Halteflächen versehen, auf denen der Lagergutträger 5' auf Gegenhaltekörper 28 ruht. Über den Eingriff der Körper 27, 28 wird der Lagergutträger 5' bei der Aufwärtsbewegung des Schlittens 15 entlang des Pfeiles I angehoben.

In der Nähe des obersten Punktes während der Umlaufbewegung des Rollkörpers 25 wird der Lagergutträger 5' in die Vertikalfördereinrichtung eingekuppelt und aus der Überführungseinrichtung ausgekuppelt. Das Auskuppeln aus der Überführungseinrichtung geschieht beim Ausführungsbeispiel der Fig. 5 durch einfaches Anheben des Lagergutträgers 5', worauf sich der Haltekörper 27 vom Gegenhaltekörper 28 löst.

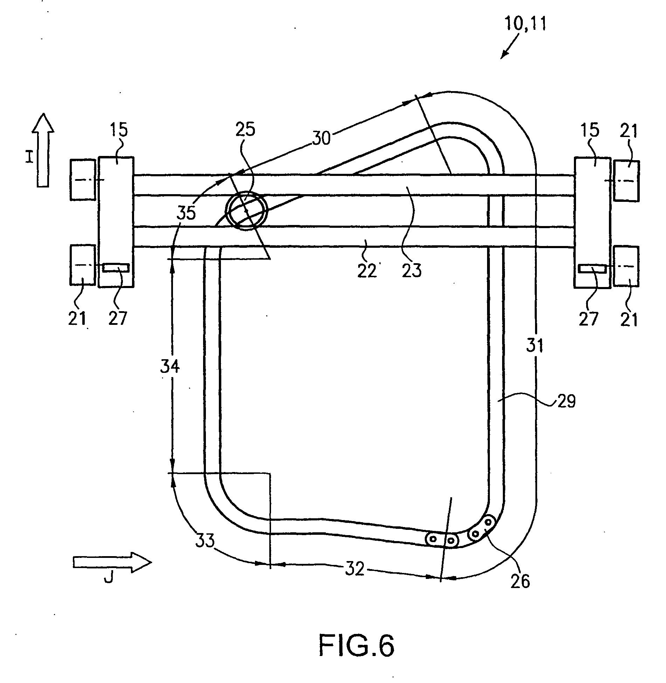

Die in Fig. 5 dargestellte Umlaufbahn des Zugmittels 26 kann durch Umlenkrollen an den Umlenkpunkten des Zugmittels oder durch eine Führungsnut erzeugt werden. Den verschiedenen Bereichen der Umlaufbahn des Rollkörpers 25 sind verschiedene Funktionen bei der Überführung der Lagergutträger zugeteilt. Dies wird im Folgenden mit Bezug auf die Fig. 6 genauer erläutert wird.

Als Zugmittel wird in der Fig. 6 beispielhaft eine Kette 26 verwendet, die in einer Führungsnut 29 in einer vorbestimmten Umlaufbahn geführt ist. Für gleiche Bauelemente werden in der Fig. 6 die bereits aus den Fig. 1 bis 5 bekannten Bezugszeichen verwendet.

In Fig. 6 ist der Rollkörper 25 in einer Position gezeigt, ab der die Umlaufbahn des Zugmittels 26 über einen Bereich 30 geneigt gegenüber der Senkrechten in Richtung Vertikalfördereinrichtung verläuft. Im Bereich 30 befindet sich der Schlitten 15 mit dem auf den Haltekörpern 27 aufliegenden Lagergutträger bereits nahe dem Ende seines Hubes und wird allmählich in die Vertikalfördereinrichtung (nicht gezeigt) eingekoppelt. Für diesen Einkopplungsvorgang muss die Vertikalgeschwindigkeit im Bereich 30 in etwa der Vertikalgeschwindigkeit der Vertikalfördereinrichtung entsprechen und liegt vorzugsweise etwas darunter. Die Vertikalgeschwindigkeit des Rollkörpers 25 hängt bei gegebener Umlaufgeschwindigkeit der Kette allein vom Steigungswinkel des Bereichs 30 ab. In dem sich anschließenden Bereich 31 werden die Schlitten 15 nach Übergabe der Lagergutträger an die Vertikalfördereinrichtungen mit maximaler Vertikalgeschwindigkeit weg von der Vertikalfördereinrichtung. Im Bereich 31 verläuft daher die Umlaufbahn in senkrechter Richtung. Am Ende des Bereiches 31 befinden sich die Schlitten 15 mit den Haltkörpern 27 in einer Position, in der die Lagergutträger von den Horizontalfördereinrichtungen übernommen oder an diese abgegeben werden.

In dieser vertikalen Position verharren die Schlitten 15, während der Rollkörper 25 einen Bereich 32 durchläuft. Im Bereich 32 verläuft die Umlaufbahn nahezu waagerecht oder leicht zur Vertikalfördereinrichtung geneigt. Zu Beginn des Bereichs 32 befinden sich die Haltekörper 27 beabstandet unterhalb der Gegenhaltekörper 28, so dass durch die Horizontalfördereinrichtung ein neuer Lagergutträger aus der Richtung des Pfeiles J mit den Gegenhaltekörpern 28 oberhalb der Haltekörper 27 positioniert werden kann. Durch ein geringes Anheben der Schlitten in Richtung Vertikalfördereinrichtung am Ende des Bereichs 32 werden Haltekörper 27 und Gegenhaltekörper 28 miteinander in Kontakt gebracht.

In dem sich an den Bereich 32 anschließenden Bereich 33 erhöht sich die Vertikalgeschwindigkeit des Rollkörpers 25 und damit der Schlitten 15 und der auf den Haltekörpern 27 aufliegende Lagergutträger wird angehoben. An den Bereich 33 schließt sich ein Bereich 34 an, über den die Schlitten mit maximaler Vertikalgeschwindigkeit weg von der Horizontalfördereinrichtung zur Vertikalfördereinrichtung transportiert wird.

Anschließend wird die Vertikalgeschwindigkeit des Rollkörpers 25 in einem Bereich 35 der Umlaufbahn 29 auf eine Vertikalgeschwindigkeit knapp unterhalb der Vertikalgeschwindigkeit der Vertikalfördereinrichtung abgebremst. Dann beginnt der Zyklus wieder von neuem.

Die anhand der Fig. 6 beschriebene Funktionsweise gilt gleichermaßen für die oberen und unteren Überführungseinrichtungen 10, 11. Durch eine Umkehr der Umlaufrichtung der Rollkörper 25 kann eine Bewegungsumkehr erfolgen. Außerdem kann anstelle der mechanischen Steuerung der Beschleunigung über ein Getriebe eine elektronische Steuerung direkt des (nicht gezeigten) Antriebsmittels erfolgen.

Bei den oberen Überführungseinrichtungen klappen die Haltekörper 27 bei der Übergabe von Lagergutträgern an die Vertikalfördereinrichtung bzw. beim Aufsetzen der Lagergutträger 5 auf die Lagersäule weg (nicht gezeigt), so dass die Gegenhaltekörper 28 die Haltekörper 27 passieren können. Umgekehrt klappen die Haltekörper beim Anheben der Lagergutträger aus den Lagersäulen vor der Aufnahme der Lagergutträger nach vorne

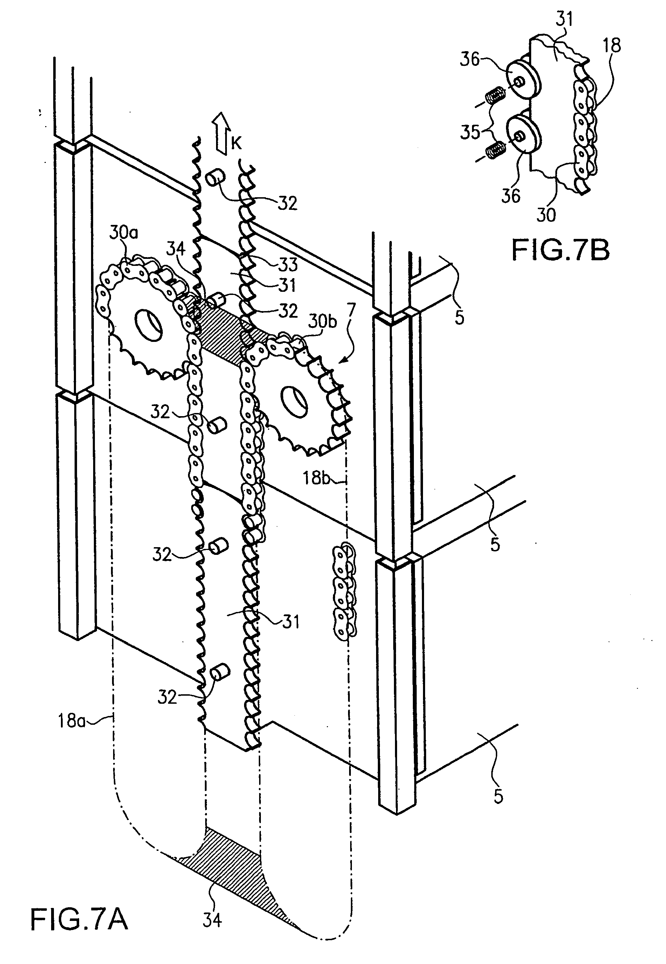

Im folgenden wird der Aufbau der Vertikalfördereinrichtung 7 anhand der Fig. 7A beschrieben. Dabei werden für gleiche Bauelemente wieder die gleichen Bezugszeichen wie bei den vorangegangenen Zeichnungen verwendet.

Beim Ausführungsbeispiel der Fig. 7A weist jede Vertikalfördereinrichtung 7 zwei gegenläufig angetriebene Zugmitteltriebe 18b mit jeweils einem Zugmittel 30a bzw. 30b auf. Beim Ausführungsbeispiel der Fig. 7A sind die Zugmittel als Ketten ausgestaltet, alternativ können jedoch auch Zahnriemen verwendet werden. Die beiden Zugmittel 18a, 18b sind nebeneinander angeordnet, so dass sich die beiden gegenüberliegenden Abschnitte der Zugmittel 30a, 30b in die gleiche Richtung bewegen, beispielsweise in Richtung des Pfeiles K.

An den Lagergutträgern 5 befindet sich an jeder Seitenwand eine Zahnstange 31, die mit den beiden gegenüberliegenden Abschnitte der Zugmittel 18a, 18b in Eingriff gebracht werden kann. Durch den Eingriff der Zahnstange 31 mit den Zugmitteln 18 werden die Lagergutträger 5 mit der Bewegung des Zugmittels in senkrechter Richtung transportiert.

Da die Lagergutträger 5 einer Lagersäule 4 stapeförmig aufeinanderliegen, ist es für den vertikalen Transport der Lagersäule lediglich notwendig, dass die Verbindung zwischen der Vertikalfördereinrichtung 7 und den Lagergutträgern 5 an dem untersten oder den beiden untersten Lagergutträgern stattfindet.

Mindestens ein Ende 33 der Zahnstange 31 ist so ausgestaltet, dass das Einkuppeln der Zahnstange 31 des Lagergutträgers 5 in die Vertikalfördereinrichtung 7 erleichtert wird. Insbesondere kann das Ende der Zahnstange 31 ballig oder angefast oder abgeschrägt sein.
Das Einkuppeln wird dadurch erreicht, dass jeweils ein Lagergutträger in Transportrichtung K durch eine Überführungseinrichtung 10, 11 mit seinen Zahnstangen in einen Überführungsbereich 34 zwischen den Zugmitteln 18a, 18b mit einer Vertikalgeschwindigkeit gleich oder knapp unter der Vertikalgeschwindigkeit der Vertikalfördereinrichtung 7 herantransportiert wird. Die Zahnstange 31 greift automatisch in das Zugmittel 26 ein und die Vertikalfördereinrichtung hebt den Lagergutträger von der Überführungseinrichtung ab.

Als eine Alternative zur zweiseitig ausgestalteten Zahnstange 31 mit zwei gegenüberliegenden Zugmittelgetrieben 18a, 18b kann auch lediglich ein einzelner Zugmitteltrieb 18 mit einer einseitig verzahnten Zahnstange 31 verwendet werden, wie dies in Fig. 7B dargestellt ist. In diesem Fall müssen gegenüberliegend der Zahnstange 31 über Krafterzeuger 35 an die Zahnstange 31 angepresste Rollen 36 oder andere Gleitelemente verwendet werden, um den Eingriff zwischen Zugmittel 30 und Zahnstange 31 aufrechtzuerhalten.

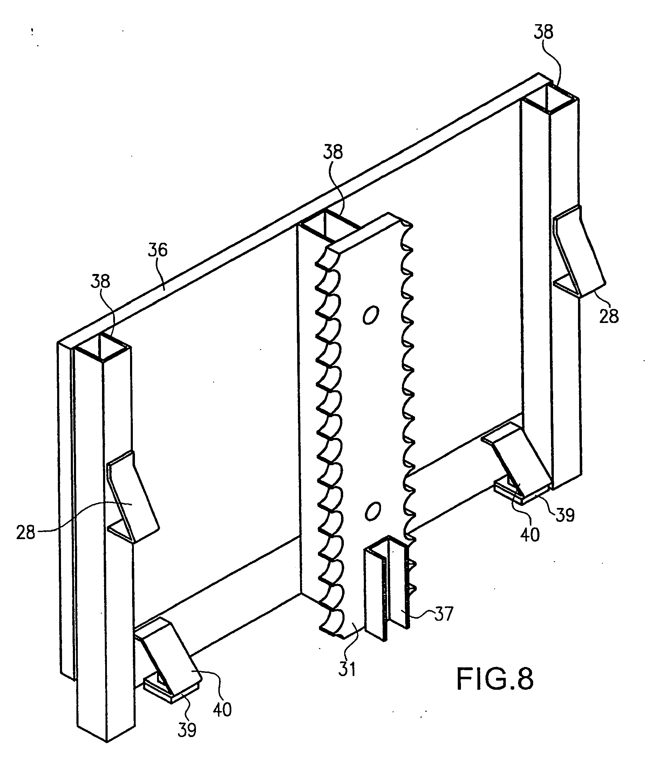

Anhand der Fig. 8 wird nun der Aufbau einer Seitenwand 36 eines Lagergutträgers 5 beschrieben.

An der Seitenwand des Lagergutträgers 5 sind neben der Zahnstange 31 und den Gegenhaltekörpern 28 aus gebogenen Stahlblech weitere Einrichtungen vorgesehen:

Eine als in vertikaler Richtung verlaufendes U-Profil ausgestaltete Mitnehmeraufnahme 37 ist an der Zahnstange angebracht und nimmt den fingerförmigen Mitnehmer 12 der Horizontalfördereinrichtungen 8, 9 auf.

Vertikal verlaufende Stahlstreben 38 versteifen die Seitenwand 36 der Lagergutträger. Innerhalb einer Lagersäule kommen die Lagergutträger auf den Stahlstreben aufeinander zu liegen, so dass in den Lagergutträger selbst keine Lasten eingeleitet werden.

Außerdem ist jede Seitenwand eines Lagergutträgers 5 mit Gleitschuhen 39 versehen, auf denen der Lagergutträger 5 entlang der Gleitschiene 13 der Horizontalfördereinrichtungen gleitet. Hierzu sind die Gleitschuhe mit einer Zwischenlage 40 versehen, die aus einem Material mit geringem Reibungskoeffizienten bei Paarung mit dem Material der Gleitschiene gefertigt ist.

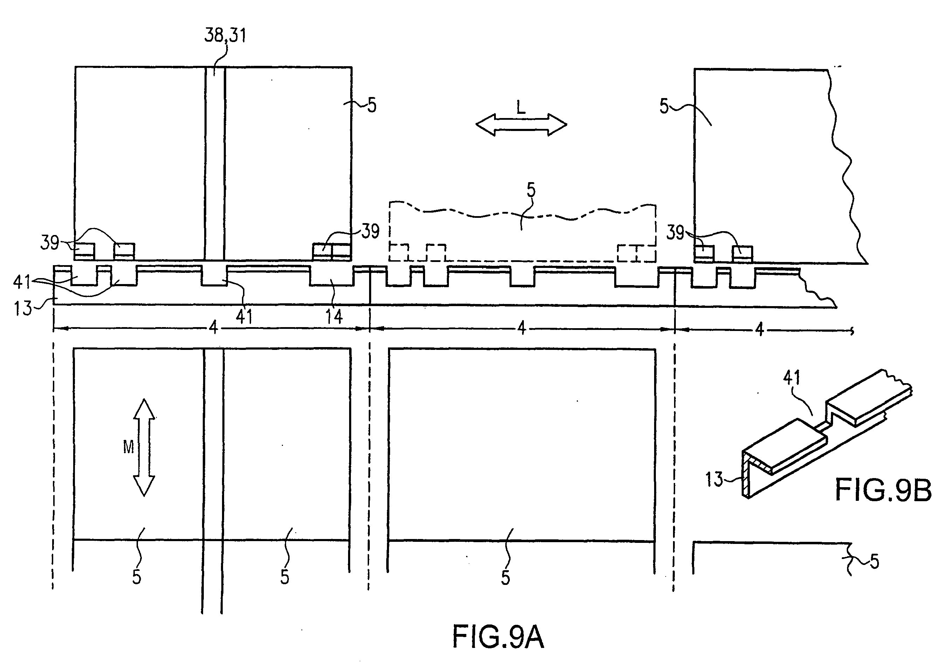

In Fig. 9A ist gezeigt, wie durch die besondere Anordnung der Gleitschuhe und von Aussparungen an der Gleitschiene 13 die Lagergutträger 5 nur an vorgegebenen Positionen von den oberen Horizontalfördereinrichtungen 9 zu den oberen Überführungseinrichtungen 11 und umgekehrt bewegt werden können.

Die oberen Gleitschienen der oberen Horizontalfördereinrichtungen 9 sind im Bereich jeweils einer Lagersäule 4 mit Aussparungen 41 versehen. Die Aussparungen sind so angeordnet, dass die Gleitschuhe 39 und die Haltekörper 28 sowie die Streben 38 nur dann an der Gleitschiene 13 vorbei transportiert werden können, wenn der Lagergutträger 5 mit der Lagersäule 4 fluchtet.
Wie in Fig. 9B zu erkennen ist, weist die Gleitschiene 13 ein im wesentlichen L-förmiges Profil auf und die Aussparungen erstrecken sich im wesentlichen über den horizontalen Bereich.

## Patentansprüche

1. Umlauf-Lagersystem (1) mit wenigstens drei Lagersäulen (4) aus übereinander angeordneten, im Betrieb umlaufenden Lagergutträgem (5), mit einer Mehrzahl von Vertikalfördereinrichtungen (7), durch die im Betrieb wenigstens ein Teil der Lagersäule in vertikaler Richtung bewegbar ist, wobei jede Vertikalfördereinrichtung einer Lagersäule zugeordnet und jede Lagersäule durch die ihr zugeordnete Vertikalfördereinrichtung unabhängig von den anderen Lagersäulen in senkrechter Richtung bewegbar ist, **gekennzeichnet durch** eine Mehrzahl von am oberen und unteren Ende der Lagersäulen (4) angeordneten, separat ansteuerbaren Horizontalfördereinrichtungen (8, 9), **durch** die im Betrieb die Lagergutträger (5) jeweils von einer Lagersäule zu einer anderen Lagersäule überführbar sind.

2. Umlauf-Lagersystem (1) nach Anspruch 1, **dadurch gekennzeichnet, dass** sich die Lagergutträger (5) einer Lagersäule (4) im wesentlichen stapelformig auf einem unteren Lagergutträger abstützen, der sich mit der Vertikalförderelnrichtung (7) im Eingriff befindet.

3. Umlauf-Lagersystem (1) nach einem der oben genannten Ansprüche, **dadurch gekennzeichnet, dass** die Vertikalfördereinrichtung (7) wenigstens ein Zugmittelgetriebe (18) umfasst.

4. Umlauf-Lagersystem (1) nach Anspruch 3, **dadurch gekennzeichnet, dass** die Vertikalfördereinrichtung (7) zwei gegenläufige Zugmittelgetriebe (18a, 18b) umfasst.

5. Umlauf-Lagersystem (1) nach einem der oben genannten Ansprüche, **dadurch gekennzeichnet, dass** die Lagergutträger (5) mit einem Kupplungsabschnitt (31) versehen sind, der während des Umlaufs der Lagergutträger (5) in die Vertikalfördereinrichtung (7) einkuppelbar ist.

6. Umlauf-Lagersystem (1) nach Anspruch 5, **dadurch gekennzeichnet, dass** der Kupplungsabschnitt (31) als eine mit einem Kettentrieb (18) in Eingriff bringbare Zahnstange (31) ausgestaltet ist.

7. Umlauf-Lagersystem (1) nach einem der oben genannten Ansprüche, **dadurch gekennzeichnet, dass** die Vertikalfördereinrichtungen (7) im unteren Bereich der Lagersäule (4) angeordnet sind.

8. Umlauf-Lagersystem (1) nach einem der oben genannten Ansprüche, **dadurch gekennzeichnet, dass** die Horizontalfördereinrichtungen (8, 9) jeweils eine sich im wesentlichen in waagerechter Richtung erstreckende Gleitschiene (13) aufweisen, auf der sich ein Gleitabschnitt (39) der Lagergutträger (5) beim Transport von einer Lagersäule (4) zur anderen gleitend abstützt.

9. Umlauf-Lagersystem (1) nach Anspruch 8, **dadurch gekennzeichnet, dass** die Gleitschienen (13) der oberen Horizontalfördereinrichtungen (9) im Bereich jeder Lagersäule (4) Aussparungen (41) aufweist, die mit Vorsprüngen (28, 38, 39) an den Lagergutträgern zusammenwirken und eine Entnahme der Lagergutträger (5) nur an vorbestimmten Positionen relativ zu den Lagersäulen (4) ermöglichen.

10. Umlauf-Lagersystem (1) nach einem der oben genannten Ansprüche, **dadurch gekennzeichnet, dass** für jede Lagersäule (4) wenigstens eine Überführungseinrichtung (10, 11) vorgesehen ist, die zwischen den Horizontalfördereinrichtungen (8, 9) dieser Lagersäule (4) und der Vertikalfördereinrichtung (7) dieser Lagersäule (4) angeordnet ist und durch die die Lagergutträger (5) von den Horizontalfördereinrichtungen (8, 9) zur Vertikalfördereinrichtung (7) überführbar sind.

11. Umlauf-Lagersystem (1) nach Anspruch 10, **dadurch gekennzeichnet, dass** jeder Lagersäule (4) wenigstens eine obere (10) und eine untere (11) Übertührungseinrichtungen zugeordnet sind.

12. Umlauf-Lagersystem (1) nach Anspruch 10 oder 11, **dadurch gekennzeichnet, dass** die Überführungseinrichtung (10, 11) einen Nockentrieb (14, 15, 16, 22, 23, 25) ausbildet.

13. Umlauf-Lagersystem (1) nach Anspruch 12, **dadurch gekennzeichnet, dass** der Nockentrieb (14, 15, 16, 22, 23, 25) ein Zugmittelgetriebe (14) umfasst.

14. Bausatz für ein Umlauf-Lagersystem (1) nach einem der oben genannten Ansprüche, **gekennzeichnet durch** eine Mehrzahl von im wesentlichen gleichen, aneinander baubaren Lagersäulenmodulen, in denen jeweils wenigstens eine Lagersäule (4) aufgenommen ist und die jeweils mit wenigstens einer Vertikalfördereinrichtung (7) versehen sind, und **durch** eine Mehrzahl von Horizontalfördereinrichtungen (8, 9), **durch** die die Lagersäulenmodule zu einem Umlauf verbindbar sind.

15. Verfahren zum Verwalten eines Umlauf-Lagersystems (1) mit einer Mehrzahl von in Lagersäulen (4) angeordneten Lagergutträgem (5), bei dem einer der Lagergutträger aus einer Lagersäule in eine vorbestimmte Zugriffsposition gebracht wird, indem die Lagergutträger umlaufen und von einer Lagersäule in eine andere Lagersäule überführt und die Lagersäulen (4) unabhängig
voneinander in vertikaler Richtung verfahren werden, **dadurch gekennzeichnet, dass** die Lagergutträger (5) zwischen den Lagersäulen (4) mittels einer Mehrzahl von oberen und einer Mehrzahl von unteren Horizontalfördereinrichtungen (8, 9) transportiert werden.

16. Verfahren nach Anspruch 15, **dadurch gekennzeichnet, dass** das Gewicht der Lagersäule (4) im wesentlichen durch den sich jeweils am unteren Ende der Lagersäule befindlichen Lagergutträger (5) aufgenommen wird.

17. Verfahren nach Anspruch 15 oder 16, **dadurch gekennzeichnet, dass** die Lagersäule durch Krafteinleitung an ihrem jeweils am unteren Ende der Lagersäule befindlichen Lagergutträger in senkrechter Richtung bewegt wird.

18. Verfahren nach einem der Ansprüche 15 bis 17, **dadurch gekennzeichnet, dass** die Lagergutträger (5) durch eine Überführungseinrichtung (10, 11) von der Horizontalfördereinrichtung (8, 9) an das Ende einer Lagersäule (4) transportiert und an die Lagersäule angekoppelt werden.

19. Verfahren nach Anspruch 18, **dadurch gekennzeichnet, dass** die Lagerguttrager (5) durch die Überführungseinrichtung (11) von der Horizontaifördereinrichtung (9) entnommen und auf eine Lagersäule (4) aufgesetzt werden.

20. Verfahren nach einem der Ansprüche 15 bis 18, **dadurch gekennzeichnet, dass** bei mehr als zwei Lagersäulen (4) der Umlauf durch ein beliebiges Paar von Lagersäulen gesteuert wird.

## Claims

1. Carousel storage system (1) comprising at least three storage columns (4) of storage-goods carriers (5) which are arranged one above the other and revolve during operation, and comprising a plurality of vertical conveyor devices (7), by means of which at least a part of the storage column can be moved in the vertical direction during operation, wherein each vertical conveyor device is assigned to a storage column and each storage column can be moved in the vertical direction by the vertical conveyor device assigned to it, independently of the other storage columns, **characterised by** a plurality of separately controllable horizontal conveyor devices (8, 9) which are arranged at the upper and lower end of the storage columns (4) and by means of which the storage-goods carriers (5) can in each case be transferred from one storage column to another storage column during operation.

2. Carousel storage system (1) according to claim 1, **characterised in that** the storage-goods carriers (5) of a storage column (4) are supported essentially in a stack-like manner on a lower storage-goods carrier which is in engagement with the vertical conveyor device (7).

3. Carousel storage system (1) according to one of the aforementioned claims, **characterised in that** the vertical conveyor device (7) comprises at least one traction gear (18).

4. Carousel storage system (1) according to claim 3, **characterised in that** the vertical conveyor device (7) comprises two traction gear (18a, 18b) running in opposite directions.

5. Carousel storage system (1) according to one of the aforementioned claims, **characterised in that** the storage-goods carriers (5) are provided with a coupling section (31) which can be coupled into the vertical conveyor device (7) as the storage-goods carriers (5) revolve.

6. Carousel storage system (1) according to claim 5, **characterised in that** the coupling section (31) is designed as a toothed rack (31) which can be brought into engagement with a chain drive (18).

7. Carousel storage system (1) according to one of the aforementioned claims, **characterised in that** the vertical conveyor devices (7) are arranged in the lower region of the storage column (4).

8. Carousel storage system (1) according to one of the aforementioned claims, **characterised in that** the horizontal conveyor devices (8, 9) in each case have a sliding rail (13) which extends essentially in the horizontal direction and on which a sliding section (39) of the storage-goods carriers (5) is supported in a sliding manner when being transported from one storage column (4) to the other.

9. Carousel storage system (1) according to claim 8, **characterised in that** the sliding rails (13) of the upper horizontal conveyor devices (9) have cut outs (41) in the region of each storage column (4), which cooperate with protrusions (28, 38, 39) on the storage-goods carriers and allow a removal of the storage-goods carriers (5) only at predetermined positions relative to the storage columns (4).

10. Carousel storage system (1) according to one of the aforementioned claims, **characterised in that** at least one transfer device (10, 11) is provided for each storage column (4), which is arranged between the horizontal conveyor devices (8, 9) of this storage column (4) and the vertical conveyor device (7) of this storage column (4) and by means of which the storage-goods carriers (5) can be transferred from the horizontal conveyor devices (8, 9) to the vertical conveyor device (7).

11. Carousel storage system (1) according to claim 10, **characterised in that** each storage column (4) is assigned at least one upper (10) and one lower (11) transfer device.

12. Carousel storage system (1) according to claim 10 or 11, **characterised in that** the transfer device (10, 11) forms a cam drive (14, 15, 16, 22, 23, 25).

13. Carousel storage system (1) according to claim 12, **characterised in that** the cam drive (14, 15, 16, 22, 23, 25) comprises a traction gear (14).

14. Kit for a carousel storage system (1) according to one of the aforementioned claims, **characterised by** a plurality of essentially identical storage column modules which can be built against each other, in each of which at least one storage column (4) is accommodated and which are in each case provided with at least one vertical conveyor device (7), and by a plurality of horizontal conveyor devices (8, 9), by means of which the storage column modules can be connected to form a carousel.

15. Method for managing a carousel storage system (1) comprising a plurality of storage-goods carriers (5) arranged in storage columns (4), in which one of the storage-goods carriers is brought from a storage column into a predetermined access position by revolving the storage-goods carriers and transferring them from one storage column to another storage column and by moving the storage columns (4) in the vertical direction independently of one another, **characterised in that** the storage-goods carriers (5) are transported between the storage columns (4) by means of a plurality of upper and a plurality of lower horizontal conveyor devices (8, 9).

16. Method according to claim 15, **characterised in that** the weight of the storage column (4) is held essentially by the storage-goods carrier (5) located in each case at the lower end of the storage column.

17. Method according to claim 15 or 16, **characterised in that** the storage column is moved in the vertical direction by a force being applied to its storage-goods carrier located in each case at the lower end of the storage column.

18. Method according to one of claims 15 to 17, **characterised in that** the storage-goods carriers (5) are transported from the horizontal conveyor device (8, 9) to the end of a storage column (4) by a transfer device (10, 11) and are coupled to the storage column.

19. Method according to claim 18, **characterised in that** the storage-goods carriers (5) are removed from the horizontal conveyor device (9) by the transfer device (11) and placed on a storage column (4).

20. Method according to one of claims 15 to 18, **characterised in that**, in the case of more than two storage columns (4), the revolving is controlled by any pair of storage columns.

## Revendications

1. Système de stockage à carrousel (1) avec au moins trois colonnes de stockage (4) composées de supports de produits à stocker (5) qui sont superposés et qui circulent, en fonctionnement, et avec plusieurs convoyeurs verticaux (7) grâce auxquels, en fonctionnement, une partie au moins de la colonne de stockage est mobile dans le sens vertical, chaque convoyeur vertical étant associé à une colonne et chaque colonne étant mobile dans le sens vertical, grâce au convoyeur qui lui est associé, indépendamment des autres colonnes, **caractérisé par** plusieurs convoyeurs horizontaux (8, 9) qui sont disposés à l'extrémité supérieure et à l'extrémité inférieure des colonnes de stockage (4), qui sont aptes à être commandés séparément et grâce auxquels, en fonctionnement, chaque support (5) peut être transféré d'une colonne à l'autre.

2. Système de stockage à carrousel (1) selon la revendication 1, **caractérisé en ce que** les supports de produits à stocker (5) d'une colonne (4) s'appuient globalement en forme de piles sur un support de produit à stocker inférieur qui est en prise avec le convoyeur vertical (7).

3. Système de stockage à carrousel (1) selon l'une des revendications précédentes, **caractérisé en ce que** le convoyeur vertical (7) comprend au moins une transmission à traction (18).

4. Système de stockage à carrousel (1) selon la revendication 3, **caractérisé en ce que** le convoyeur vertical (7) comprend deux transmissions à traction inverses (18a, 18b).

5. Système de stockage à carrousel (1) selon l'une des revendications précédentes, **caractérisé en ce que** les supports (5) sont pourvus d'une partie d'accouplement (31) qui est apte à s'engrener, pendant la circulation des supports (5), dans le convoyeur (7).

6. Système de stockage à carrousel (1) selon la revendication 5, **caractérisé en ce que** la partie d'accouplement (31) est conçue comme une crémaillère (31) apte à s'engrener avec une transmission à chaîne (18).

7. Système de stockage à carrousel (1) selon l'une des revendications précédentes, **caractérisé en ce que** les convoyeurs verticaux (7) sont disposés dans la zone inférieure de la colonne de stockage (4).

8. Système de stockage à carrousel (1) selon l'une des revendications précédentes, **caractérisé en ce que** les convoyeurs horizontaux (8, 9) ont chacun une glissière (13) qui s'étend globalement dans le sens horizontal et sur laquelle une partie coulissante (39) des supports (5) s'appuie glissement lors du transport d'une colonne (4) à l'autre.

9. Système de stockage à carrousel (1) selon la revendication 8, **caractérisé en ce que** les glissières (13) des convoyeurs horizontaux supérieurs (9) présentent, dans la zone de chaque colonne (4), des creux (41) qui coopèrent avec des saillies (28, 38, 39) prévues sur les supports (5) et qui permettent de prélever les supports (5) seulement au niveau de positions prédéfinies, par rapport aux colonnes de stockage (4).

10. Système de stockage à carrousel (1) selon l'une des revendications précédentes, **caractérisé en ce qu'**il est prévu pour chaque colonne de stockage (4) au moins un dispositif de transfert (10, 11) qui est disposé entre les convoyeurs horizontaux (8, 9) de cette colonne (4) et le convoyeur vertical (7) de celle-ci, et grâce auquel les supports (5) peuvent être transférés des convoyeurs horizontaux (8, 9) sur le convoyeur vertical (7).

11. Système de stockage à carrousel (1) selon la revendication 10, **caractérisé en ce qu'**au moins un dispositif de transfert supérieur (10) et un dispositif de transfert inférieur (11) sont associés à chaque colonne de stockage (4).

12. Système de stockage à carrousel (1) selon la revendication 10 ou 11, **caractérisé en ce que** le dispositif de transfert (10, 11) forme une commande à came (14, 15, 16, 22, 23, 25).

13. Système de stockage à carrousel (1) selon la revendication 12, **caractérisé en ce que** la commande à came (14, 15, 16, 22, 23, 25) comprend une transmission à traction (14).

14. Ensemble modulaire pour un système de stockage à carrousel (1) selon l'une des revendications précédentes, **caractérisé par** plusieurs modules de colonnes de stockage qui sont globalement identiques, qui sont aptes à être montés les uns contre les autres, dans lesquels est logée au moins une colonne de stockage (4) et qui sont pourvus chacun d'au moins un convoyeur vertical (7), et par plusieurs convoyeurs horizontaux (8, 9) grâce auxquels les modules de colonnes de stockage peuvent être reliés pour former un carrousel.

15. Procédé pour gérer un système de stockage à carrousel (1) comprenant plusieurs supports de produits à stocker (5) disposés dans des colonnes de stockage (4), selon lequel l'un desdits supports est amené à partir d'une colonne dans une position d'accès prédéfinie, grâce au fait que les supports tournent, et sont transférés d'une colonne à l'autre, et les colonnes (4) sont déplacées dans le sens vertical indépendamment les unes des autres, **caractérisé en ce que** les supports de produits de stockage (5) sont transportés entre les colonnes (4) à l'aide de plusieurs convoyeurs horizontaux supérieurs et de plusieurs convoyeurs horizontaux inférieurs (8, 9).

16. Procédé selon la revendication 15, **caractérisé en ce que** le poids de la colonne de stockage (4) est reçu globalement par le support de produit à stocker (5) qui se trouve à l'extrémité inférieure de ladite colonne.

17. Procédé selon la revendication 15 ou 16, **caractérisé en ce que** la colonne de stockage est déplacée dans le sens vertical grâce à l'introduction d'une force au niveau de son support de produit à stocker qui se trouve à l'extrémité inférieure de ladite colonne.

18. Procédé selon l'une des revendications 15 à 17, **caractérisé en ce que** les supports de produits à stocker (5) sont transportés par un dispositif de transfert (10, 11) du convoyeur horizontal (8, 9) jusqu'à l'extrémité d'une colonne (4) et sont accouplés à ladite colonne.

19. Procédé selon la revendication 18, **caractérisé en ce que** les supports de produits à stocker (5) sont pris par le dispositif de transfert (11) sur le convoyeur horizontal (9) et sont posés sur une colonne (4).

20. Procédé selon l'une des revendications 15 à 18, **caractérisé en ce que** s'il y a plus de deux colonnes (4), la rotation est commandée par n'importe quelle paire de colonnes.
